# EUROPÄISCHE PATENTANMELDUNG

(11) **EP 1 516 769 A2**
(43) Veröffentlichungstag der Anmeldung: **23.03.2005**
(21) Anmeldenummer: 04021595.6
(22) Anmeldetag: 10.09.2004
(51) Int. Cl.: B60L 3/00

(54) **Flurförderzeug mit einem elektrischen Fahrantrieb und einem Mittel zur Bestimmung der Antriebsdrehzahl**

(30) Priorität: 19.09.2003 DE 10344092; 31.08.2004 EP 04020682
(71) Anmelder: STILL S.A.R.L., 77107 Meaux Cedex (FR)
(72) Erfinder: Brouart, Francois, 60280 Margny les Compiegne (FR); Ferreira, Paulo, 60870 Rieux (FR); Krupka, Daniel, 60170 Cambronne (FR)
(74) Vertreter: Lang, Michael (DE)

(57) **Zusammenfassung**

Die Erfindung betrifft ein Flurförderzeug (1) mit einem elektrischen Fahrantrieb (13) und einem Mittel (17) zur Bestimmung der Antriebsdrehzahl. Die Änderungsrate der Antriebsdrehzahl ist, insbesondere bei plötzlichen Änderungen, ermittelbar.

## Beschreibung

Die Erfindung betrifft ein Flurförderzeug mit einem elektrischen Fahrantrieb und einem Mittel zur Bestimmung der Antriebsdrehzahl. Flurförderzeuge sind häufig mit einem elektrischen Fahrantrieb ausgestattet, weil dieser sehr gut regelbar ist, keine Schadstoffe ausstößt, bei einer Bremsung des Flurförderzeugs zur Verzögerung eingesetzt werden kann und dabei ermöglicht, Energie beispielsweise in eine Batterie einzuspeisen. Elektrische Antriebsmotoren, wie sie für derartige Fahrantriebe verwendet werden, verfügen häufig über einen Drehzahlsensor, der zur Überwachung des Motors, aber auch zur Bestimmung der Fahrgeschwindigkeit verwendet werden kann. Dieser Sensor ist zumeist integraler Bestandteil des Motors, kann aber auch an anderer Stelle des Antriebsstrangs angebracht sein. Für die Regelung des Motors und die Anzeige der Fahrgeschwindigkeit wird lediglich die Drehzahl erfasst. Diese ist als Maß für besondere Beanspruchungen des Flurförderzeugs oder einzelner Komponenten davon jedoch nicht geeignet. Große Beanspruchungen können beispielsweise auftreten, wenn beim Bremsen des Flurförderzeugs mittels des elektrischen Antriebsmotors die Bremswirkung des Motors zu groß ist und das Antriebsrad blockiert. Das Rad unterliegt örtlich erhöhtem Verschleiß und wird unrund. Zudem besteht eine erhebliche Sicherheitsgefahr, da das blockierte Rad keine Seitenführungskräfte mehr übertragen kann und damit insbesondere bei gelenkten Antriebsrädern das Flurförderzeug unkontrollierbar werden kann. Der Einsatz eigens zur Erfassung dieser Beanspruchungen vorgesehener Sensoren wäre mit großem Aufwand und hohen Kosten verbunden.

Der Erfindung liegt daher die Aufgabe zugrunde, ein Flurförderzeug mit einem elektrischen Fahrantrieb und einem Mittel zur Bestimmung der Antriebsdrehzahl zu schaffen, bei dem mit einer einfachen Anordnung besondere Beanspruchungen des Flurförderzeugs oder einzelner Komponenten des Flurförderzeugs erfasst werden können.

Diese Aufgabe wird erfindungsgemäß dadurch gelöst, dass eine Vorrichtung zur Ermittlung der Änderungsrate der Antriebsdrehzahl, insbesondere bei hohen Beträgen der Änderungsrate, vorhanden ist. Änderungen der Antriebsdrehzahl, wie sie in der Änderungsrate quantifiziert sind, gehen zumeist einher mit einer Änderung der vom Antriebsmotor erbrachten Leistung. Insbesondere hohe Beträge der Änderungsrate, also innerhalb kurzer Zeit auftretende große Änderungen der Antriebsdrehzahl bedeuten eine große Belastung für die Komponenten des Antriebsstranges. Die Ermittlung der Änderungsrate ermöglicht daher, die Belastungen des Antriebsstranges zu erfassen und geeignete Maßnahmen zur Reduzierung dieser Beanspruchung zu ergreifen.

In einer besonders vorteilhaften Ausgestaltung der Erfindung ist bei Überschreiten eines vorgegebenen Wertes der Änderungsrate der Antriebsdrehzahl die Drehzahl des Antriebs in einer der Änderung entgegengesetzten Weise veränderbar. Dadurch wird eine Überlastung vermieden, da die Änderung nicht größer als ein bestimmter Wert wird.

In einer weiteren zweckmäßigen Ausgestaltung sind bei Überschreiten eines vorgegebenen Wertes der Änderungsrate der Antriebsdrehzahl Informationen über den Betriebszustand des Flurförderzeugs, insbesondere über Zeitpunkt und Wert der Änderungsrate der Antriebsdrehzahl, in einer Speichervorrichtung des Flurförderzeugs, vorzugsweise einem Fehlerspeicher, aufzeichenbar. Dadurch kann bei Wartungsarbeiten oder bei Schäden am Flurförderzeug das Auftreten übermäßiger Beanspruchung erkannt und Gegenmaßnahmen ergriffen werden.

Weiterhin ist es vorteilhaft, wenn bei Überschreiten eines vorgegebenen Wertes der Änderungsrate der Antriebsdrehzahl eine Anzeigevorrichtung, insbesondere ein akustisches und/oder ein optisches Wamsignal, aktivierbar ist. Dadurch wird die Bedienperson auf einen Betriebszustand mit besonders hoher Belastung oder sogar Sicherheitsgefahr aufmerksam gemacht und kann Gegenmaßnahmen ergreifen.

Es ist zweckmäßig, wenn der oder die vorgegebenen Werte der Änderungsrate in Abhängigkeit vom Betriebszustand des Flurförderzeugs festlegbar sind. Dadurch ist auch bei unterschiedlichen Betriebszuständen gewährleistet, dass die Leistungsfähigkeit des Flurförderzeugs ideal ausgenutzt wird, ohne dass es zu einer Überlastung kommt.

In einer besonders einfachen Ausgestaltung der Erfindung werden die bei Überschreiten eines vorgegebenen Wertes der Änderungsrate der Antriebsdrehzahl ausführbaren Maßnahmen nur bei einer Verringerung der Antriebsdrehzahl ausgelöst. Dies bedeutet, dass nur beim Bremsvorgang, der für die Sicherheit des Flurförderzeugs besonders kritisch ist, Maßnahmen getroffen werden und daher nur für eine Art der Drehzahländerung ein Eingriff der Steuerung erfolgen muss.

Es ist weiterhin von Vorteil, wenn bei Überschreiten eines vorgegebenen Wertes der Änderungsrate der Antriebsdrehzahl eine Bremsvorrichtung betätigbar ist. Dadurch wird eine zusätzliche Bremswirkung erzielt und die Bremswirkung des Antriebsmotors kann verringert werden. Beispielsweise kann so ein Blockieren des Antriebsrades verhindert werden.

Es ist zweckmäßig wenn die Zeitspanne zur Ermittlung der Änderungsrate zwischen 1 und 100 Millisekunden, vorzugsweise zwischen 10 und 30 Millisekunden, beträgt. Dies ergibt einen guten Kompromiss zwischen zeitlicher Auflösung und Menge der zu verarbeitenden Daten.

In einer vorteilhaften Ausgestaltung der Erfindung ist als Mittel zur Bestimmung der Antriebsdrehzahl eine Berechungsvorrichtung, insbesondere eine elektrische Steuerung des Flurförderzeugs, vorgesehen, die aus elektrischen Eingangsdaten mindestens eines Antriebsmotors, insbesondere Spannungen und Strömen, die Antriebsdrehzahl berechnet. Die elektrischen Eingangsdaten des Antriebsmotors, insbesondere Eingangsspannungen und -ströme, werden von der elektrischen Steuerung vorgegeben und überwacht. Bestimmten Spannungen und Strömen können Motordrehzahlen und damit Antriebsdrehzahlen zugeordnet werden. Damit ist kein Drehzahlsensor erforderlich, um die Drehzahl des Antriebs zu bestimmen, wodurch ein einfacher und kostengünstiger Aufbau erzielt wird.

Weitere Vorteile und Einzelheiten der Erfindung werden anhand des in den schematischen Figuren dargestellten Ausführungsbeispiels näher erläutert. Dabei zeigt
- Figur 1: einen Niederhubkommissionierer mit einer Deichsel als Beispiel für ein erfindungsgemäßes Flurförderzeug in Seitenansicht,
- Figur 2: ein Schema der Verkabelung eines erfindungsgemäßen Flurförderzeugs,
- Figur 3: ein Schaubild der Drehzahl und der Änderungsrate der Drehzahl über der Zeit bei einer starken Bremsung eines erfindungsgemäßen Flurförderzeugs.

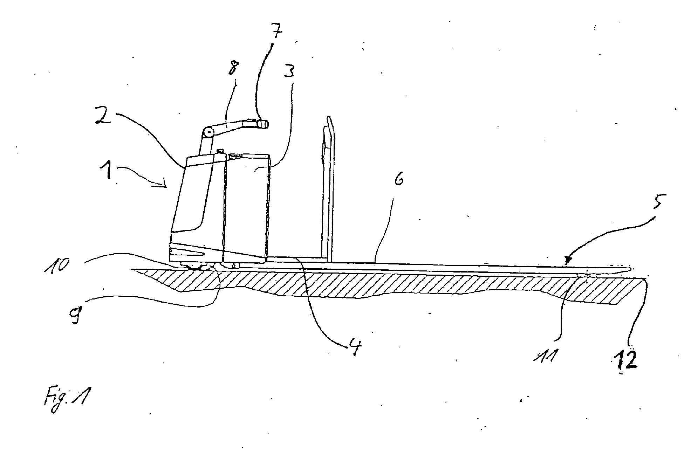

In Figur 1 ist als Beispiel eines erfindungsgemäßen Flurförderzeugs ein Niederhubkommissionierer 1 gezeigt. Hinter einem Antriebsteil 2 ist ein Batterieteil 3 und eine Fahrerplattform 4 angeordnet. Hinter der Fahrerplattform 4 befindet sich der Lastteil 5 mit den Lastaufnahmemitteln 6. Die Steuer- und Fahrbefehle werden über Bedienelemente 7, die in einer Deichsel 8 angeordnet sind, von einer Bedienperson vorgegeben. Der Antrieb erfolgt über ein Antriebsrad 9, das von einem hier nicht dargestellten Elektromotor angetrieben und über die Deichsel 8 gelenkt wird. Über beiderseits des Antriebsrades 9 angeordnete Laufräder 10 wird der Kommissionierer 1 seitlich abgestützt. Die Laufräder 10 verfügen über eine hier nicht sichtbare Bremsvorrichtung.

Bei unbeladenem Fahrzeug 1 oder wenn der Hauptteil der Last sich am Ende der Lastaufnahmemittel 6 nahe der Lastrollen 11 befindet, besteht bei Fahrzeugen nach dem Stand der Technik besonders bei abrupten Fahrmanövern eine erhöhte Gefahr, dass das Antriebsrad 9 zu viel Schlupf aufweist. Dies kann sowohl beim Beschleunigungsvorgang als auch beim Bremsen auftreten, da die Bremsung insbesondere zur Energierückgewinnung mittels des elektrischen Antriebs erfolgt. Das Rad 9 dreht dann durch beziehungsweise blockiert. Auch bei einem Wechsel der Fahrbahnoberfläche kann es aufgrund eines dann niedrigeren Reibungskoeffizienten zwischen Rad 9 und Fahrbahn 12 zum Durchdrehen des Rades 9 kommen. Insbesondere bei verölten oder nassen Böden besteht diese Gefahr selbst bei niedrigen Geschwindigkeiten. Das Blockieren des Antriebsrades 9 beim Bremsen führt zu besonders hohem Verschleiß des Rades 9 und zur Verschmutzung der Fahrbahn 12. Da über das Antriebsrad 9 auch die Lenkung des Kommissionierers 1 vorgenommen wird, reichen beim Durchdrehen oder Blockieren des Antriebsrades 9 die Seitenführungskräfte des Rades 9 nicht mehr aus, um sicher zu lenken.

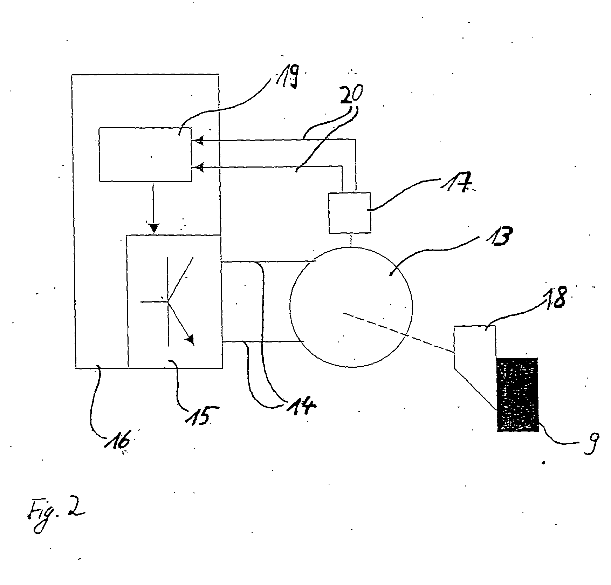

Der für das Verständnis der Erfindung relevante Teil der Verkabelung eines erfindungsgemäßen Flurförderzeugs ist schematisch in Figur 2 dargestellt. Ein elektrischer Antriebsmotor 13 wird über Leitungen 14 vom Leistungsteil 15 einer elektrische Steuerung 16 mit Strom versorgt. Ein Geschwindigkeitssensor 17 misst die Drehzahl des Motors 13. Da der Motor 13 über das Getriebe 18 fest mit dem Antriebsrad 9 gekoppelt ist, ist die Drehzahl des Motors 13 der Drehzahl des Antriebsrades 9 und damit der Geschwindigkeit des Fahrzeugs 1 proportional. In die elektrische Steuerung 16 integriert ist eine Rechnereinheit 19, in der die Verarbeitung der Daten des Geschwindigkeitssensors 17, die über die Leitungen 20 übertragen werden, stattfindet. Aus der Drehzahl des Motors 13 wird die Drehzahl des Antriebsrades 9 und die Geschwindigkeit des Flurförderzeugs 1 sowie die Änderungsrate der Drehzahl berechnet. Die Erfassung der Geschwindigkeit erfolgt in geeignet gewählten Zeitabständen, die einerseits kurz genug gewählt sind, um auch plötzliche Veränderungen der Geschwindigkeit hinreichend genau zu erfassen und andererseits lang genug, damit nicht eine nicht zu große Menge an Daten anfällt. Im vorliegenden Fall hat sich eine Zeitspanne von etwa 20 Millisekunden als geeignet erwiesen. Aus den zwei Drehzahlwerten vor und nach dieser Zeitspanne wird die Veränderung der Drehzahl berechnet.

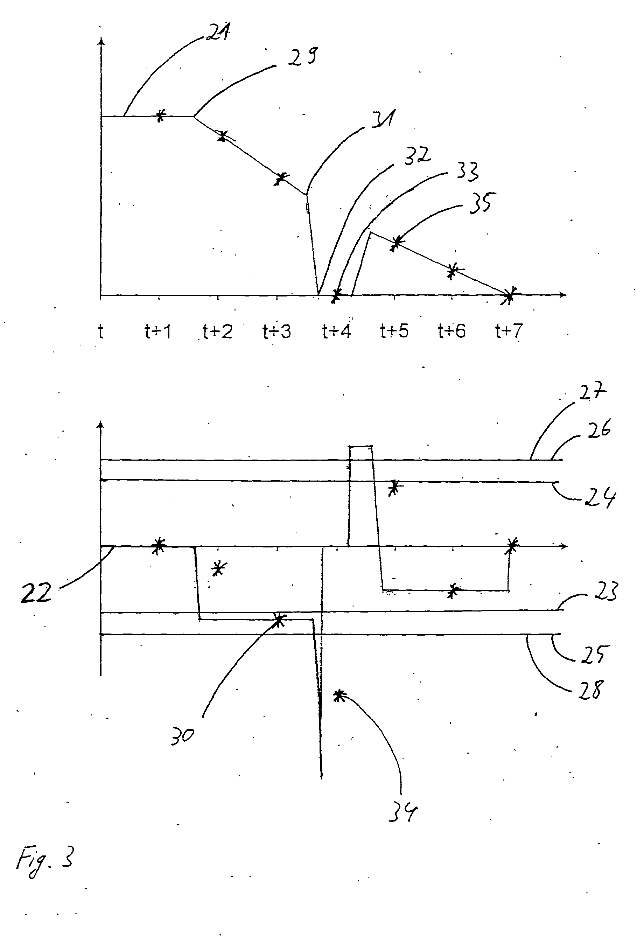

In Figur 3 ist oben ein typischer zeitlicher Verlauf 21 der Drehzahl und unten ein typischer zeitlicher Verlauf 22 der Änderungsrate der Drehzahl und der erfindungsgemäßen Grenzwerte bei einem Bremsmanöver eines erfindungsgemäßen Flurförderzeugs 1 schematisch gezeigt. Auf der Abszisse sind ab einem Zeitpunkt t die Zeitpunkte t + x, an denen die Drehzahl und die Änderungsrate der Drehzahl erfasst werden, angegeben. Mit einem * markiert sind die von der Rechnereinheit 19 zu diesen Zeitpunkten erfassten Werte, die aus den realen Drehzahlwerten ermittelt werden. Für die Änderungsrate werden diese Werte aus der Differenz der gemessenen Geschwindigkeitswerte und der Zeitspanne zwischen einem Punkt t + x und einem Punkt t + x + 1 ermittelt. Während also die reale Änderungsrate der Drehzahl deren Ableitung darstellt, handelt es sich bei der ermittelten Änderungsrate aufgrund der zeitlich diskreten Messpunkte der Drehzahl um einen Differenzenquotienten. Im unteren Teil der Figur sind zudem der untere Grenzwert 23 sowie der obere Grenzwert 24 für die Änderungsrate, bei dem eine Warnung an die Bedienperson ausgelöst wird, sowie der untere Grenzwert 25 und der obere Grenzwert 26, bei dem die Drehzahl des Antriebs in einer der Änderung entgegengesetzten Weise verändert wird, angegeben. Identisch mit den Grenzwerten 25 und 26 sind die Grenzwerte 27 und 28, bei denen eine Eintragung im Fehlerspeicher des Flurförderzeugs 1 erfolgt. Dabei werden die für den Betriebszustand relevanten Daten des Flurförderzeugs 1, wie beispielsweise die Geschwindigkeiten vor und nach dem Überschreiten des Grenzwertes und damit auch die Änderungsrate, der Zeitpunkt des Überschreitens, Motorströme- und -spannungen sowie gegebenenfalls Einsatzort, Identifikation der Bedienperson, Lenkwinkel, Beladung und Hubhöhe des Lastaufnahmemittels 6 gespeichert. Eine Auswertung dieser Daten, beispielsweise bei einer Wartung, ermöglicht es, kritische Betriebssituationen zu erkennen und diese beispielsweise bei einer Neuprogrammierung der Motorsteuerung 16 oder zur Schulung von Bedienpersonen heranzuziehen. So kann beispielsweise, wenn bei unterschiedlicher Beladung eine unterschiedliche Blockiemeigung beim Bremsvorgang besteht, eine lastabhängige Höchstgeschwindigkeit ermittelt und eingestellt werden.

Die Drehzahlkurve 21 ist zunächst konstant, die Änderungsratenkurve 22 gleich Null, das Flurförderzeug bewegt sich mit konstanter Geschwindigkeit. Beim Punkt 29 beginnt der Verzögerungsvorgang, die Drehzahlkurve 21 fällt ab, die Kurve 22 der Änderungsrate ist negativ. Der für die Änderungsrate von der Rechnereinheit 19 ermittelte Wert 30 liegt unterhalb des Grenzwerts 23, so dass eine Warnung an die Bedienperson, in diesem Fall ein Wamton, abgegeben wird. Zwischen den Punkten 31 und 32 reduziert sich die Drehzahlkurve 21 auf 0, weil beispielsweise das Flurförderzeug 1 mit dem Antriebsrad 9 auf rutschigen Untergrund, beispielsweise Öl oder Wasser, geraten ist oder die Motorbremswirkung nach Vorgabe der Bedienperson erhöht wurde. Dies bedeutet, dass das Antriebsrad 9 blockiert und der Kommissionierer 1 nicht mehr lenkbar ist. Der Wert 33 der Drehzahlkurve 21 wird von der Rechnereinheit 19 registriert und der Wert 34 der Änderungsrate berechnet. Dieser liegt unterhalb des Grenzwertes 25. Daher wird von der elektrischen Steuerung 16 die Bremswirkung durch eine Änderung der Motorparameter des Motors 13, beispielsweise der Spannung oder des Stroms, so reduziert, so dass das Rad 9 wieder zu rollen beginnt und gleichzeitig eine nicht dargestellte Zusatzbremseinrichtung an den Laufrädern 10 aktiviert, so dass am Punkt 35 wieder eine positive Drehzahl und gemessen wird. Es erfolgt eine normale Bremsung über den Motor 13 bis bei t+7 der Motor 13 und damit das Flurförderzeug 1 zum Stillstand kommt. Im Normalbetrieb wird vorzugsweise die Bremswirkung des Antriebsmotors 13 ausgenutzt, um das Flurförderzeug 1 abzubremsen, um so die Energierückspeisung ausnutzen zu können. Bei einem Blockieren des Antriebsrades 9 insbesondere bei höheren Geschwindigkeiten wird durch die Aktivierung der Zusatzbremsvorrichtung an den Laufrädern 10, während gleichzeitig die Bremswirkung des Antriebsmotors 13 reduziert wird, ein erheblicher Sicherheitsgewinn erzielt. Diese Maßnahme verhindert ein dauerhaftes Blockieren des Antriebsrades 9 und erhält somit die Lenkfähigkeit des Flurförderzeugs 1, während gleichzeitig eine gute Bremswirkung erzielt wird.

Bei dem gezeigten Kommissionierer führt ungleichmäßige Beladung des Fahrzeugs zu einer Entlastung des Antriebsrades und damit zu einer verringerten Haftung. Damit ist die Gefahr, dass das Rad beim Bremsen blockiert, besonders groß. Wird dies durch in den Figuren nicht dargestellte entsprechende Sensoren erkannt, werden die Grenzwerte 23 bis 28 für die Änderungsrate der Antriebsdrehzahl, insbesondere diejenigen für die Warnung der Bedienperson, so gesetzt, dass schon eine relativ geringe Änderungsrate der Drehzahl zu Maßnahmen führt, um in jedem Fall das Blockieren beziehungsweise Durchdrehen des Antriebsrades 9 zu verhindem. Es sind auch Ausführungsformen denkbar, bei denen diese Umstellung durch die Bedienperson von Hand vorgenommen werden kann.

Als Warnsignal wird ein akustisches Signal verwendet, da dieses von der Bedienperson im Normalbetrieb sicher wahrgenommen wird; es sind aber auch andere Signalformen nach dem Stand der Technik, beispielsweise optische oder mechanische Vorrichtungen, denkbar.

Eine Sonderform der Erfindung stellt eine Schaltung dar, bei der der oder die Grenzwerte der Drehzahländerungsrate oberhalb einer gewissen Drehzahl immer dem Abfall von der augenblicklichen Geschwindigkeit auf einen Wert nahe Null entspricht, also ein Ansprechen nur erfolgt, wenn das Antriebsrad 9 beim Bremsen blockiert. Dieser Umstand ist besonders einfach feststellbar und ermöglicht so einen besonders einfachen Aufbau.

In weiteren Ausführungsformen kann anstelle eines im Motor 13 integrierten Geschwindigkeitssensors 17 auch ein Sensor am Antriebsrad 9 oder an anderer Stelle des Antriebsstrangs verwendet werden. Auch kann die Festlegung der Grenzwerte 23 bis 28 für die Änderungsraten in Abhängigkeit von anderen Parametern als der Beladung abhängen, welche den Betriebszustand charakterisieren.

## Patentansprüche

1. Flurförderzeug (1) mit einem elektrischen Fahrantrieb (13) und einem Mittel zur Bestimmung der Antriebsdrehzahl (17), **dadurch gekennzeichnet, dass** eine Vorrichtung (19) zur Ermittlung der Änderungsrate der Antriebsdrehzahl, insbesondere bei hohen Beträgen der Änderungsrate, vorhanden ist.

2. Flurförderzeug nach Anspruch 1, **dadurch gekennzeichnet, dass** bei Überschreiten eines vorgegebenen Wertes der Änderungsrate der Antriebsdrehzahl die Drehzahl des Antriebs (13) in einer der Änderung entgegengesetzten Weise veränderbar ist.

3. Flurförderzeug nach Anspruch 1 oder 2, **dadurch gekennzeichnet, dass** bei Überschreiten eines vorgegebenen Wertes der Änderungsrate der Antriebsdrehzahl Informationen über den Betriebszustand des Flurförderzeugs (1), insbesondere über Zeitpunkt und Wert der Änderungsrate der Antriebsdrehzahl, in einer Speichervorrichtung des Flurförderzeugs (1), vorzugsweise einem Fehlerspeicher, aufzeichenbar sind.

4. Flurförderzeug nach einem der Ansprüche 1 bis 3, **dadurch gekennzeichnet, dass** bei Überschreiten eines vorgegebenen Wertes der Änderungsrate der Antriebsdrehzahl eine Anzeigevorrichtung, insbesondere ein akustisches und/oder ein optisches Warnsignal, aktivierbar ist.

5. Flurförderzeug nach einem der Ansprüche 1 bis 4, **dadurch gekennzeichnet, dass** bei Überschreiten eines vorgegebenen Wertes der Änderungsrate der Antriebsdrehzahl eine Bremsvorrichtung betätigbar ist.

6. Flurförderzeug nach einem der Ansprüche 1 bis 5, **dadurch gekennzeichnet, dass** der oder die vorgegebenen Werte der Änderungsrate in Abhängigkeit vom Betriebszustand des Flurförderzeugs (1) festlegbar sind.

7. Flurförderzeug nach einem der Ansprüche 1 bis 6, **dadurch gekennzeichnet, dass** die bei Überschreiten eines vorgegebenen Wertes der Änderungsrate der Antriebsdrehzahl ausführbaren Maßnahmen nur bei einer Verringerung der Antriebsdrehzahl ausgelöst werden.

8. Flurförderzeug nach einem der Ansprüche 1 bis 7, **dadurch gekennzeichnet, dass** die Zeitspanne zur Ermittlung der Änderungsrate zwischen 1 und 100 Millisekunden, vorzugsweise zwischen 10 und 30 Millisekunden, beträgt.

9. Flurförderzeug nach einem der Ansprüche 1 bis 8, **dadurch gekennzeichnet, dass** als Mittel zur Bestimmung der Antriebsdrehzahl (17), eine Berechungsvorrichtung, insbesondere eine elektrische Steuerung (16) des Flurförderzeugs (1), vorgesehen ist, die aus elektrischen Eingangsdaten des Antriebsmotors (13), insbesondere Spannungen und Strömen, die Antriebsdrehzahl berechnet.
